# EUROPÄISCHE PATENTSCHRIFT

(11) **EP 2 298 493 B1**
(45) Veröffentlichungstag und Bekanntmachung des Hinweises auf die Patenterteilung: **30.05.2012**
(21) Anmeldenummer: 10008739.4
(22) Anmeldetag: 21.08.2010
(51) Int. Cl.: B23Q 1/62, B23Q 5/28, H02K 41/00

(54) **Handhabungsvorrichtung mit Linearmotoren für Greifer, Werkzeuge und/oder Werkstücke**
Handling device with linear motors for grippers, tools and/or workpieces
Dispositif de manipulation avec moteurs linéaires pour manipulateurs, outils et/ou pièces usinées

(30) Priorität: 17.09.2009 DE 102009042560
(43) Veröffentlichungstag der Anmeldung: 23.03.2011
(73) Patentinhaber: GAS - Automation GmbH, 78112 St. Georgen (DE)
(72) Erfinder: Heilmann, Matthias, 78126 Königsfeld (DE); Huber, Ralf, 78086 Brigachtal (DE)
(74) Vertreter: Dreiss

(56) Entgegenhaltungen:
- JP-A- 62 088 528
- US-A- 4 667 139

## Beschreibung

Die Erfindung betrifft eine Handhabungsvorrichtung für Greifer, Werkzeuge und/oder Werkstücke, mit einer ersten Linearmotorantriebseinrichtung, welche ein erstes Primärteil aufweist zum Antrieb eines ersten Schlittens entlang einer ersten Achse mittels eines ersten Sekundärteils, und mit einer zweiten Linearmotorantriebseinrichtung, welche ein zweites Primärteil aufweist zum Antrieb eines zweiten Schlittens entlang einer zweiten Achse mittels eines zweiten Sekundärteils, wobei der zweite Schlitten an dem ersten Schlitten gelagert ist und zur Anordnung eines Greifers, Werkzeugs und/oder Werkstücks dient und wobei die zweite Achse quer, insbesondere senkrecht, zu der ersten Achse verläuft.

Handhabungsvorrichtungen der vorstehend genannten Art dienen dazu, Greifer, Werkzeuge und/oder Werkstücke mehrachsig handhaben zu können. Hierfür wird ein erster Schlitten entlang einer ersten Achse angetrieben und ein zweiter Schlitten, welcher an dem ersten Schlitten gelagert ist, entlang einer zweiten Achse (siehe z.B. US-A-4,667,139).

Es hat sich herausgestellt, dass zum Antrieb der Schlitten einer Handhabungsvorrichtung Linearmotorantriebseinrichtungen besonders gut geeignet sind. Linearmotorantriebseinrichtungen weisen ein Primärteil auf, welcher auch als Stator bezeichnet werden kann. Darüber hinaus weisen die Linearmotorantriebseinrichtungen ein Sekundärteil auf, welcher auch als Läufer bezeichnet werden kann. Der Primärteil weist Wicklungen zur Erzeugung eines sich entlang der Achse des Linearmotorantriebs ("Linearmotor-Achse") bewegenden Magnetfelds auf. Der Sekundärteil weist Permanentmagnete auf, welche entsprechend der Bewegung des Magnetfelds angetrieben werden, so dass ein mit dem Sekundärteil verbundener Schlitten entlang der Achse antreibbar ist.

Die Linearmotorantriebseinrichtungen haben einen relativ hohen Energiebedarf, sodass entsprechend großzügig dimensionierte elektrische Leitungen erforderlich sind. Um auch die zweite Linearmotorantriebseinrichtung unabhängig von der Stellung des zweiten Schlittens mit Energie versorgen zu können, werden Kabelführungen in Form sogenannter "Schleppketten" verwendet, welche es erlauben, eine elektrische Verbindung zu dem Primärteil des zweiten Schlittens herzustellen.

Da die Handhabungsvorrichtung mit hohen Antriebskräften und sehr hohen Geschwindigkeiten betrieben werden, unterliegen die in einer Schleppkette gelagerten Stromkabel einem hohen Verschleiß. Auch die Schleppkette selbst hat einen hohen Wartungsbedarf.

Hiervon ausgehend liegt der Erfindung die Aufgabe zugrunde, eine Handhabungsvorrichtung der eingangs genannten Art so zu verbessern, dass Schleppketten nicht erforderlich sind.

Diese Aufgabe wird bei einer Handhabungsvorrichtung der eingangs genannten Art erfindungsgemäß dadurch gelöst, dass der erste Primärteil und der zweite Primärteil ortsfest und/oder relativ zueinander unbewegbar an einem gemeinsamen Maschinengestell angeordnet sind und dass sich der zweite Primärteil in einer zu der ersten Achse parallelen Richtung zumindest über einen Teilhub des Gesamthubs des ersten Schlittens erstreckt.

Im Rahmen der Erfindung wurde erkannt, dass es nicht erforderlich ist, den Primärteil der zweiten Linearantriebseinrichtung an dem ersten Schlitten anzuordnen. Vielmehr ist der Primärteil der zweiten Linearantriebseinrichtung ortsfest, so dass starre, unbewegliche Stromkabel verwendet werden können. Erfindungsgemäß ist der zweite Primärteil also von der Bewegung des ersten Schlittens entkoppelt.

Im Rahmen der Erfindung ist weiterhin vorgesehen, dass sich der zweite Primärteil in einer zu der ersten Achse parallelen Richtung zumindest über einen Teilhub des Gesamthubs des ersten Schlittens erstreckt. Im Unterschied zum Stand der Technik ist der zweite Primärteil also nicht nur entlang der Bewegungsachse des zweiten Schlittens wirksam, sondern auch parallel hierzu. Zumindest entlang des Teilhubs des ersten Schlittens ist es dann möglich, den zweiten Schlitten mit Hilfe des zweiten Primärteils anzutreiben.

Die erfindungsgemäße Handhabungsvorrichtung hat den weiteren Vorteil, dass der zweite Primärteil nicht gemeinsam mit dem ersten Schlitten mitbewegt werden muss. Auch eine Mitbewegung einer Schleppkette und der Kabel zur Stromversorgung des zweiten Primärteils ist nicht mehr erforderlich. Auf diese Weise kann der erste Primärteil zum Antrieb des ersten Schlittens entlang der ersten Achse schwächer dimensioniert werden. Darüber hinaus kann der erste Schlitten auch mit höheren Geschwindigkeiten angetrieben werden, da die erste Linearmotorantriebseinrichtung eine geringere Masse beschleunigen und abbremsen muss.

Durch den möglichen Verzicht auf den Einsatz von (vielgliedrigen) Schleppketten eignet sich die erfindungsgemäße Handhabungsvorrichtung besonders gut für den Einsatz in Reinräumen.

Im Rahmen der Erfindung ist es möglich, dass der Teilhub beispielsweise mindestens ungefähr 20%, vorzugsweise mindestens ungefähr 50%, insbesondere mindestens ungefähr 80% des Gesamthubs des ersten Schlittens beträgt. Besonders bevorzugt ist es jedoch, wenn sich der zweite Primärteil über den Gesamthub des ersten Schlittens erstreckt. Dies ermöglicht es, vollkommen unabhängig von der Stellung des ersten Schlittens den zweiten Schlitten mit Hilfe der zweiten Linearantriebseinrichtung antreiben zu können.

Bei einer besonders kompakten Handhabungsvorrichtung ist vorgesehen, dass sich der erste Primärteil und der zweite Primärteil in zueinander im Wesentlichen parallelen Ebenen erstrecken. Insbesondere ist es bevorzugt, wenn die beiden Primärteile einander gegenüberliegend angeordnet werden, um eine weitere Verkleinerung der Handhabungsvorrichtung erreichen zu können.

Ferner ist es bevorzugt, wenn der erste Primärteil und der zweite Primärteil gemeinsam einen Zwischenraum begrenzen, in welchem der erste Schlitten und der zweite Schlitten angeordnet sind. Dies ermöglicht es, dass beide Primärteile jeweils in Richtung auf den Zwischenraum wirksam sind, so dass zumindest der erste Schlitten geschützt in einem kompakten Gehäuse anordenbar ist.

Alternativ zu einer Anordnung der Schlitten in einem zwischen den Primärteilen ausgebildeten Zwischenraum ist es möglich, dass der erste Primärteil und der zweite Primärteil bezogen auf den ersten Schlitten und den zweiten Schlitten auf derselben Seite angeordnet sind. Dies ermöglicht eine besonders flache Bauweise der Handhabungsvorrichtung.

Bevorzugt ist es ferner, wenn der erste Schlitten dem ersten Primärteil zugewandt angeordnet und der zweite Schlitten dem zweiten Primärteil zugewandt angeordnet ist, so dass beide Linearantriebseinrichtungen effizient betreibbar sind.

Vorzugsweise ist der zweite Schlitten an dem ersten Schlitten ausschließlich in zu der zweiten Achse paralleler Richtung bewegbar gelagert. Dies ermöglicht es, den zweiten Schlitten entlang der ersten Achse anzutreiben, indem der erste Schlitten entlang der ersten Achse angetrieben wird und den zweiten Schlitten mitbewegt. Die Bewegung des zweiten Schlittens entlang der zweiten Achse wird dann ausschließlich mit dem zweiten Primärteil gesteuert.

Eine bevorzugte Ausführungsform der Erfindung sieht vor, dass der zweite Primärteil zumindest zwei sich parallel zu der zweiten Achse erstreckende und bezogen auf die erste Achse relativ zueinander versetzte Antriebsabschnitte aufweist, welche voneinander unabhängig ansteuerbar sind. Dies ermöglicht es, bei Bedarf lediglich einen Antriebsabschnitt oder eine Teilmenge der Antriebsabschnitte anzusteuern, um den zweiten Schlitten entlang der zweiten Achse anzutreiben. Hierdurch kann Energie eingespart werden.

Die Antriebsabschnitte sind insbesondere in Abhängigkeit der Stellung des ersten Schlittens ansteuerbar. Wenn der erste Schlitten beispielsweise eine Stellung entlang der ersten Achse einnimmt, bei welcher der an dem ersten Schlitten gelagerte zweite Schlitten eine Position einnimmt, bei der sich das zweite Sekundärteil mit dem ersten Antriebsabschnitt des zweiten Primärteils überdeckt, ist es möglich, lediglich den ersten Antriebsabschnitt anzusteuern, um den zweiten Schlitten entlang der zweiten Achse antreiben zu können. Wenn sich das zweite Sekundärteil mit dem zweiten Antriebsabschnitt überdeckt, kann in entsprechender Weise lediglich dieser zweite Antriebsabschnitt angesteuert werden. Befindet sich das zweite Sekundärteil in Überdeckungslage mit beiden Antriebsabschnitten, können beide Antriebsabschnitte mit Energie versorgt werden, um sicherzustellen, dass das zweite Sekundärteil entlang der zweiten Achse angetrieben wird.

Bei einer bevorzugten Ausführungsform der Erfindung ist vorgesehen, dass die erste Achse und die zweite Achse eine bezogen auf die Schwerkraftrichtung vertikale oder im Wesentlichen vertikale Ebene aufspannen. Dies ermöglicht es, einen Greifer, ein Werkzeug und/oder ein Werkstück, welches mit dem zweiten Schlitten verbunden oder zumindest bewegungsgekoppelt ist, in einer vertikalen Ebene handhaben zu können.

Besonders bevorzugt ist es, wenn die erste Achse in einer bezogen auf die Schwerkraftrichtung vertikalen oder im Wesentlichen vertikalen Richtung verläuft. Dies ermöglicht eine besonders kompakte Anordnung der Bauteile der Handhabungsvorrichtung bei gleichzeitig großer Reichweite.

Bei einer weiteren Ausführungsform der Erfindung ist vorgesehen, dass die erste Achse und die zweite Achse eine bezogen auf die Schwerkraftrichtung horizontale oder im Wesentlichen horizontale Ebene aufspannen, um beispielsweise einen X-Y-Positioniertisch realisieren zu können.

Wenn eine Antriebseinrichtung für eine Bewegung des Maschinengestells in einer von der ersten Achse und der zweiten Achse abweichenden Bewegungsrichtung vorgesehen ist, kann ein Greifer, Werkzeug oder Werkstück nicht nur innerhalb einer Ebene, sondern in einem Raum gehandhabt werden.

Beispielsweise ist die Antriebseinrichtung in Form eines Drehtischs ausgebildet, mittels welchem das Maschinengestell um eine Drehachse drehbar ist, welche parallel oder kollinear zu der ersten Achse oder der zweiten Achse verläuft oder einer dritten Achse entspricht, welche zu der ersten Achse und zu zweiten Achse quer, insbesondere senkrecht verläuft.

Bei einer weiteren Ausführungsform ist die Antriebseinrichtung in Form eines Linearantriebs ausgebildet ist, welcher eine Bewegung des Maschinengestells entlang einer dritten Achse ermöglicht, welche quer, insbesondere senkrecht, zu der ersten Achse und zu der zweiten Achse verläuft.

In den Zeichnungen zeigen:
- Figur 1: eine perspektivische Darstellung einer Ausführungsform einer Handhabungsvorrichtung mit einem ersten Schlitten, welcher entlang einer ersten Achse bewegbar ist und sich in einer ersten Position befindet;
- Figur 2: eine der Figur 1 entsprechende Darstellung, wobei sich der erste Schlitten in einer zweiten Position befindet;
- Figur 3: eine perspektivische Darstellung einer ersten Linearmotorantriebseinrichtung zum Antrieb des ersten Schlittens;
- Figur 4: eine perspektivische Darstellung einer zweiten Linearmotorantriebseinrichtung zum Antrieb eines an dem ersten Schlitten gelagerten zweiten Schlittens;
- Figur 5: eine perspektivische Darstellung eines Primärteils der zweiten Linearmotorantriebseinrichtung;
- Figur 6: eine der Figur 5 entsprechende Darstellung einer weiteren Ausführungsform eines Primärteils;
- Figur 7: eine der Figur 5 entsprechende Darstellung einer weiteren Ausführungsform eines Primärteils;
- Figur 8: eine perspektivische Darstellung einer weiteren Ausführungsform einer mittels eines Drehtischs drehbaren Handhabungsvorrichtung;
- Figur 9: eine perspektivische Darstellung einer weiteren Ausführungsform einer mittels eines Linearantriebs verschiebbaren Handhabungsvorrichtung; und
- Figur 10: eine perspektivische Darstellung einer weiteren Ausführungsform einer Handhabungsvorrichtung mit bezogen auf den ersten Schlitten und den zweiten Schlitten auf derselben Seite angeordneten Primärteilen.

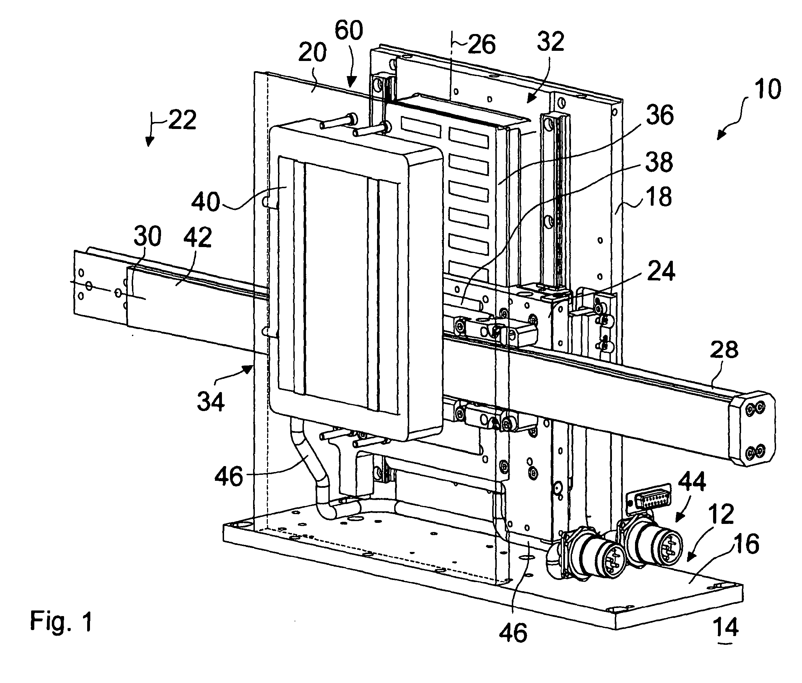

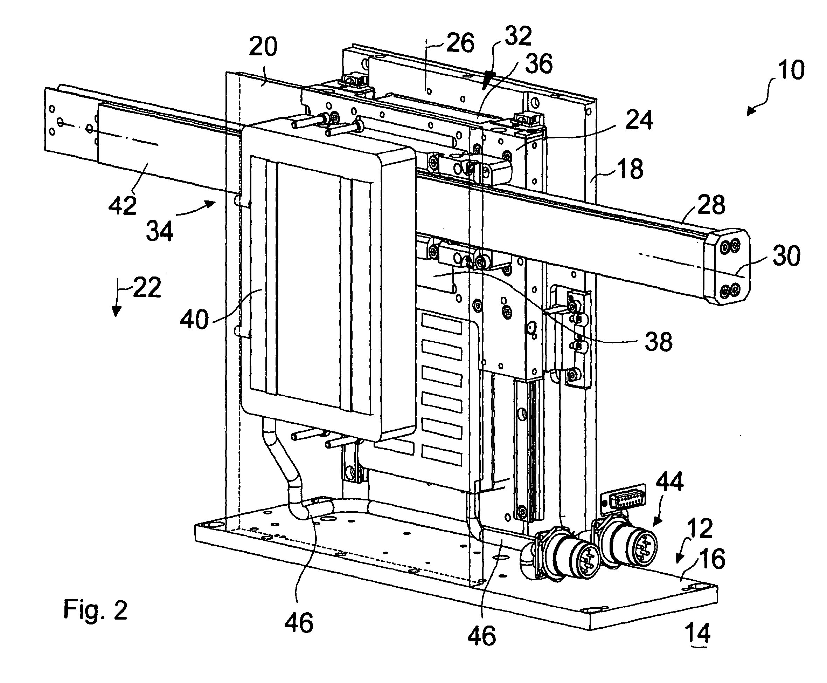

Eine Ausführungsform einer Handhabungsvorrichtung ist in den Figuren 1 und 2 insgesamt mit dem Bezugszeichen 10 bezeichnet. Die Handhabungsvorrichtung 10 weist ein Maschinengestell 12 auf, mit welchem die Handhabungsvorrichtung 10 auf einer Aufstellfläche 14 aufstellbar ist. Das Maschinengestell 12 weist ein Bodenteil 16 auf. Ferner weist das Maschinengestell 12 ein erstes Gestellteil 18 und ein zweites Gestellteil 20 auf. Die Gestellteile 18 und 20 sind fest mit dem Bodenteil 16 verbunden. Die Gestellteile 18 und 20 erstrecken sich in bezogen auf eine Schwerkraftrichtung 22 vertikalen Ebenen. In den Figuren 1 und 2 ist das zweite Gestellteil 20 teiltransparent dargestellt, um den Gesamtaufbau der Handhabungsvorrichtung 10 zu verdeutlichen.

Die Handhabungsvorrichtung 10 umfasst einen ersten Schlitten 24, welcher entlang einer ersten Achse 26 bewegbar ist. Bei der ersten Achse 26 handelt es sich insbesondere um eine bezogen auf die Schwerkraftrichtung 22 vertikale Achse.

Ferner umfasst die Handhabungsvorrichtung 10 einen an dem ersten Schlitten gelagerten zweiten Schlitten 28, welcher entlang einer zweiten Achse 30 bewegbar ist. Die Achsen 26 und 30 verlaufen quer, insbesondere senkrecht, zueinander.

Zum Antrieb des ersten Schlittens 24 ist eine erste Linearantriebseinrichtung 32 vorgesehen. Zum Antrieb des zweiten Schlittens 28 ist eine zweite Linearantriebseinrichtung 34 vorgesehen.

Die erste Linearantriebsrichtung 32 umfasst einen ersten Primärteil 36, welcher ortsfest angeordnet ist und insbesondere mit dem ersten Gestellteil 18 verbunden ist. Die erste Linearantriebseinrichtung 32 umfasst ferner einen ersten Sekundärteil 38, welcher fest mit dem ersten Schlitten 24 verbunden ist.

Die zweite Linearantriebseinrichtung 34 umfasst einen zweiten Primärteil 40, welcher ortsfest ist und insbesondere mit dem zweiten Gestellteil 20 verbunden ist. Ferner umfasst die zweite Linearantriebseinrichtung 34 einen zweiten Sekundärteil 42, welcher fest mit dem zweiten Schlitten 28 verbunden ist.

Die Primärteile 36 und 40 der Linearantriebseinrichtungen 32 und 34 dienen zur Erzeugung eines sich entlang der jeweils zugeordneten Achsen 26 und 30 bewegenden Magnetfelds. Die Sekundärteile 38 und 42 sind in Form von Permanentmagneten ausgebildet, welche der Bewegung des jeweils zugeordneten Magnetfelds folgen, so dass die mit den Sekundärteilen 38 und 42 jeweils verbundenen Schlitten 24 und 28 entlang der jeweils zugeordneten Achsen 26 und 30 antreibbar sind.

Die Handhabungsvorrichtung 10 umfasst mindestens einen elektrischen Anschluss 44, welcher die Primärteile 36 und 40 der Linearantriebseinrichtungen 32 und 34 über ortsfeste, unbewegbare Energieversorgungsleitungen 46 mit elektrischer Energie versorgen.

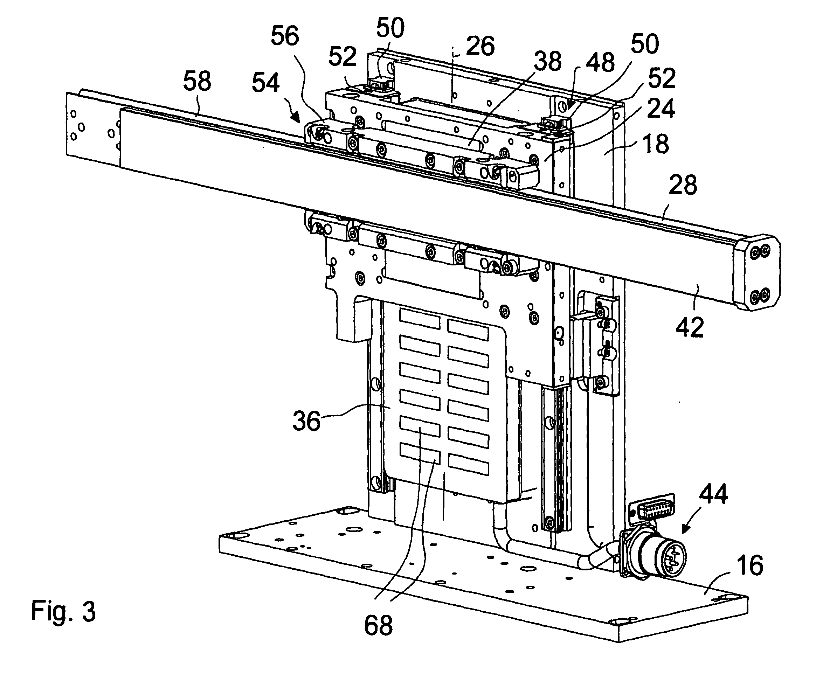

Der erste Schlitten 24 ist mittels einer ersten Führungseinrichtung 48 in zu der ersten Achse 26 paralleler Richtung geführt (vergleiche Figur 3). Die erste Führungseinrichtung 48 umfasst mindestens eine, vorzugsweise zwei Führungsschienen 50, welche mit jeweils einer Führungsschienenaufnahme 52 des ersten Schlittens 24 zusammenwirkt.

Zur Führung des zweiten Schlittens 28 an dem ersten Schlitten 24 ist eine zweite Führungseinrichtung 54 vorgesehen. Die zweite Führungseinrichtung 54 umfasst eine Führungseinheit 56, welche fest mit dem ersten Schlitten 24 verbunden ist. Die Führungseinheit 56 dient zur Führung mindestens eines relativ zu der Führungseinheit 56 bewegbaren Führungselements 58. Das Führungselement 58 ist integral mit dem zweiten Schlitten 28 ausgebildet oder fest mit dem zweiten Schlitten 28 verbunden.

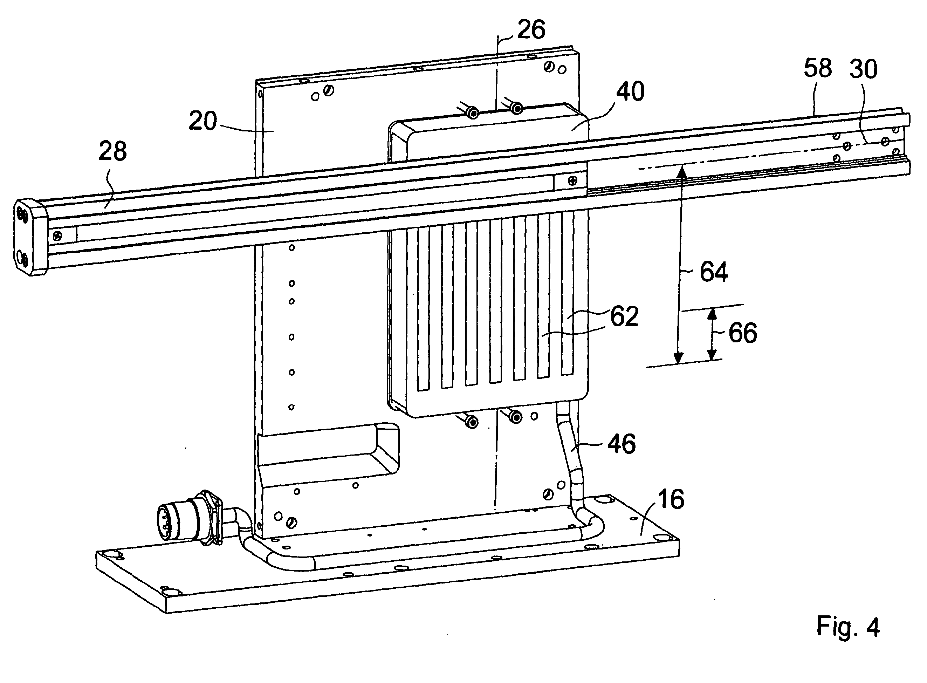

Die Primärteile 36 und 40 der Linearantriebseinrichtungen 32 und 34 sind zueinander beabstandet angeordnet und begrenzen zwischen sich einen Zwischenraum 60. In Figur 4 ist der zweite Primärteil 40 der zweiten Linearantriebseinrichtung 34 aus Sicht des Zwischenraums 60 dargestellt. Der zweite Primärteil 60 umfasst eine Mehrzahl von Wicklungen 62, welche entlang der zweiten Achse 30 gesehen nacheinander ansteuerbar sind, so dass der zweite Schlitten 28 entlang der zweiten Achse 30 bewegbar antreibbar ist. Die Wicklungen 62 erstrecken sich in einer zu der ersten Achse 26 parallelen Richtung mit einer Länge, welche dem Gesamthub 64 des ersten Schlittens 24 in zu der ersten Achse 26 paralleler Richtung entspricht. (Bei einer alternativen Ausführungsform erstrecken sich die Wicklungen 62 lediglich entlang eines Teilhubs 66 des Gesamthubs 64.)

Die Wicklungen 62 des zweiten Primärteils 40 erstrecken sich quer zu der zweiten Achse 30. In entsprechender Weise weist der erste Primärteil 36 Wicklungen 68 auf, welche sich quer und zueinander versetzt bezogen auf die erste Achse 26 erstrecken (vergleiche Figur 3).

Die Handhabungsvorrichtung 10 funktioniert folgendermaßen:

Um den ersten Schlitten 24 entlang der Achse 26 zu bewegen, werden die Wicklungen 68 des ersten Primärteils 36 nacheinander mit Strom beaufschlagt. Hierdurch entsteht ein entlang der Achse 26 wanderndes Magnetfeld, welchem der erste Sekundärteil 38 folgt. Hierdurch wird der erste Schlitten 24 entlang der ersten Achse 26 angetrieben.

Zur Bewegung des zweiten Schlittens 28 werden die Wicklungen 62 des zweiten Primärteils 40 nacheinander angesteuert, so dass ein sich parallel zu der zweiten Achse 30 bewegendes Magnetfeld erzeugt wird, welchem der zweite Sekundärteil 42 folgt. Hierdurch wird der zweite Schlitten 28 entlang der zweiten Achse 30 angetrieben.

Da sich die Wicklungen 62 und somit der für den Antrieb des zweiten Schlittens wirksame Teil des Primärteils 40 über den Gesamthub 64 des ersten Schlittens 24 erstrecken, kann ein Antrieb des zweiten Schlittens 28 entlang der zweiten Achse 30 unabhängig von der Stellung des ersten Schlittens entlang der ersten Achse 26 erfolgen.

Dadurch, dass der zweite Primärteil 40 der zweiten Linearmotorantriebseinrichtung 34 nicht mit dem ersten Schlitten 24 mitbewegt wird, sondern ortsfest ist, ist es möglich, die Energieversorgungsleitungen 46 starr auszuführen und insbesondere nicht in einer Schleppkette zu lagern. Ein mit dem zweiten Schlitten 28 verbundenes Bauteil, beispielsweise ein Greifer, ein Werkzeug und/oder ein Werkstück, kann schnell und präzise innerhalb einer durch die Achsen 26 und 30 aufgespannten Ebene gehandhabt werden. Hierbei unterliegen die Energieversorgungsleitungen 46 keinem Verschleiß.

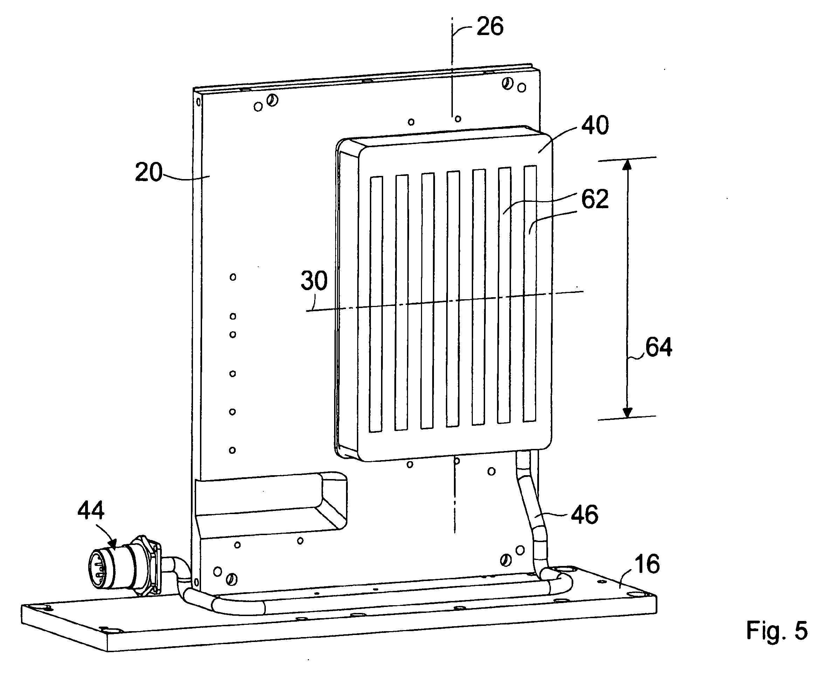

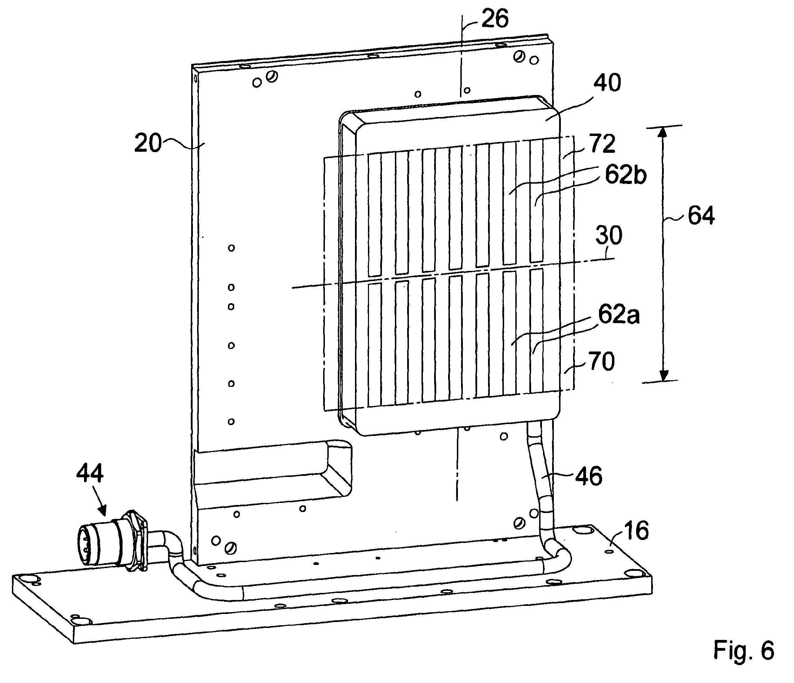

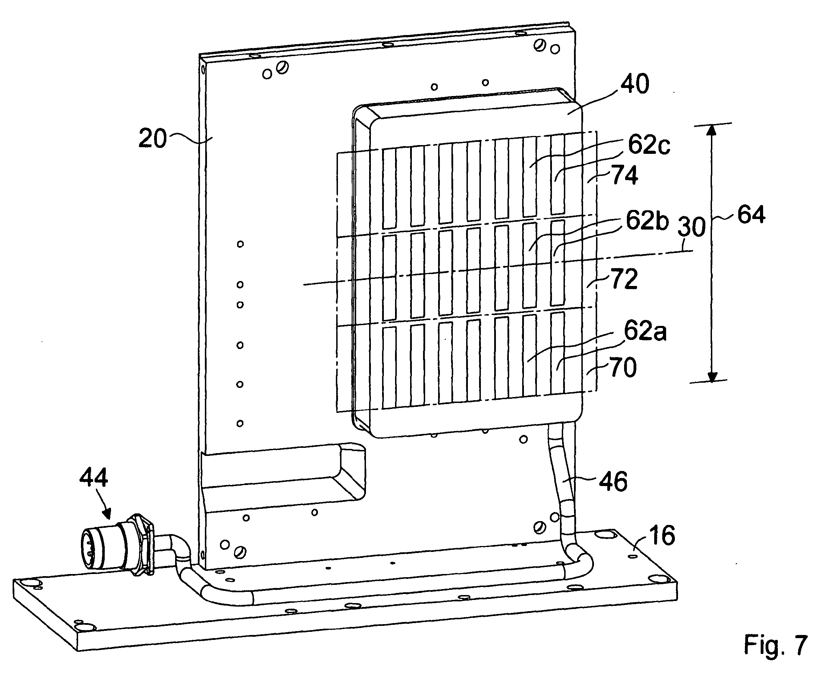

In den Figuren 6 und 7 sind weitere Ausführungsformen eines zweiten Primärteils 40 der zweiten Linearmotorantriebseinrichtung 34 dargestellt. Auch diese weisen zueinander versetzte, sich quer zu der zweiten Achse 30 erstreckende Wicklungen 62a, 62b auf. Im Unterschied zu dem unter Bezugnahme auf Figuren 4 und 5 beschriebenen zweiten Primärteil 40 erstrecken sich die Wicklungen 62a beziehungsweise 62b nur entlang eines Teils des Gesamthubs 64. Die Wicklungen 62a des zweiten Primärteils 40 gemäß Figur 6 bilden gemeinsam einen ersten Antriebsabschnitt 70; die Wicklungen 62b bilden gemeinsam einen zweiten Antriebsabschnitt 72.

Der zweite Primärteil 40 gemäß Figur 7 weist darüber hinaus einen dritten Antriebsabschnitt 74 auf, welcher Wicklungen 62c umfasst.

Die Antriebsabschnitte 70, 72, 74 erstrecken sich jeweils nur entlang eines Anteils des Gesamthubs 64. Vorzugsweise weisen die Antriebsabschnitte 70 und 72 beziehungsweise 70, 72 und 74 quer zu der zweiten Achse 30 gesehen identische Erstreckungen auf. Beispielsweise nehmen zwei Antriebsabschnitte 70 und 72 jeweils die Hälfte des Gesamthubs 64 ein oder beispielsweise nehmen drei Antriebsabschnitte 70, 72 und 74 jeweils ein Drittel des Gesamthubs 64 ein.

Die Antriebsabschnitte 70, 72, 74 sind voneinander unabhängig ansteuerbar, insbesondere in Abhängigkeit der Position des ersten Schlittens 24 entlang der ersten Achse 26. Wenn sich der zweite Sekundärteil 42 beispielsweise in Überdeckungslage mit dem ersten Antriebsabschnitt 70 befindet, ist es nicht erforderlich, auch die Wicklungen 62b des zweiten Antriebsabschnitts 72 zu bestromen. Durch Ansteuerung lediglich eines Antriebsabschnitts oder lediglich einer Teilmenge von Antriebsabschnitten ist somit für die Bewegung des zweiten Schlittens 28 entlang der zweiten Achse 30 weniger Energie erforderlich.

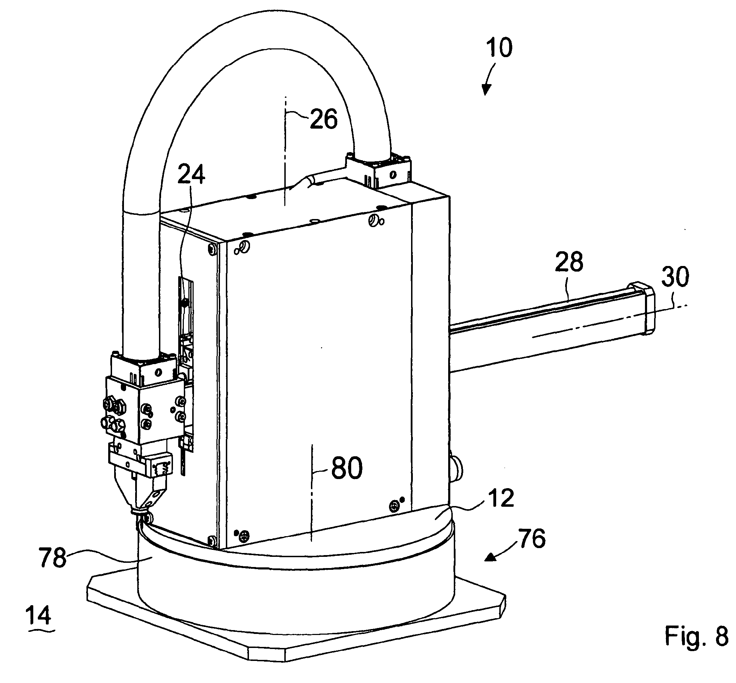

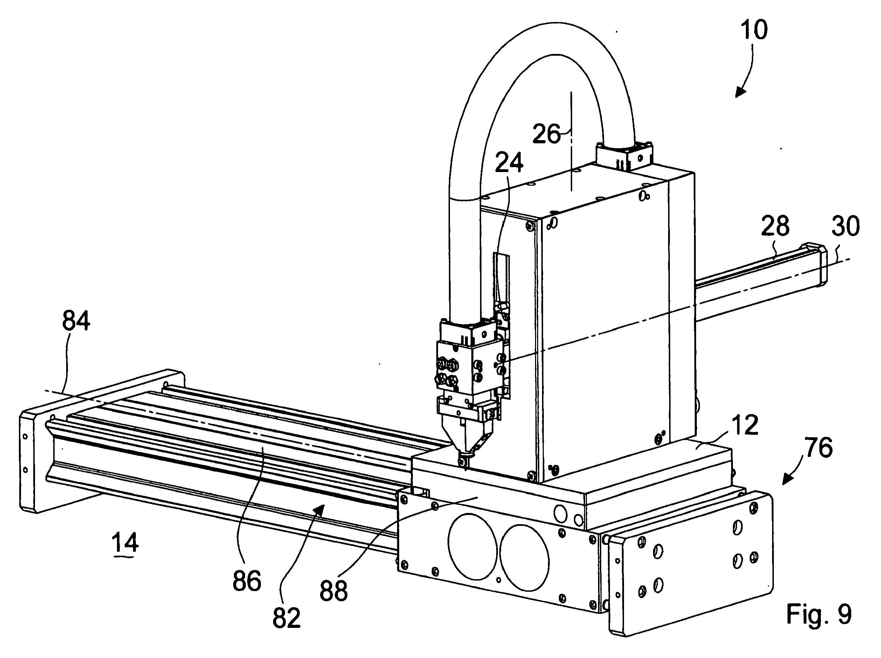

Die in den Figuren 8 und 9 dargestellten Ausführungsformen einer Handhabungsvorrichtung 10 unterscheiden sich von den vorstehend beschriebenen Ausführungsformen dadurch, dass das Maschinengestell 12 nicht direkt auf der Aufstellfläche 14 aufgestellt ist, sondern mittels einer Antriebseinrichtung 76 bewegbar antreibbar ist.

Bei der in Figur 8 dargestellten Ausführungsform einer Handhabungsvorrichtung 10 ist die Antriebseinrichtung 76 in Form eines Drehtischs 78 ausgebildet, mittels welchem das Maschinengestell 12 gemeinsam mit dem ersten Schlitten 24 und dem zweiten Schlitten 28 um eine Drehachse 80 drehbar antreibbar ist. Bei dem dargestellten Ausführungsbeispiel verläuft die Drehachse 80 parallel zu der ersten Achse 26. Bei der in Figur 9 dargestellten Ausführungsform einer Handhabungsvorrichtung 10 ist die Antriebseinrichtung 76 in Form eines Linearantriebs 82 ausgebildet, mittels welchem das Maschinengestell 12 gemeinsam mit dem ersten Schlitten 24 und dem zweiten Schlitten 28 entlang einer dritten Achse 84 verschieblich antreibbar ist. Bei dem dargestellten Ausführungsbeispiel verläuft die dritte Achse 84 senkrecht zu der ersten Achse 26 und zu der zweiten Achse 30.

Der Linearantrieb 82 ist insbesondere in Form einer Linearmotorantriebseinrichtung ausgebildet, mit einem ortsfesten dritten Sekundärteil 86 und mit einem fest mit dem Maschinengestell 12 verbundenen dritten Primärteil 88.

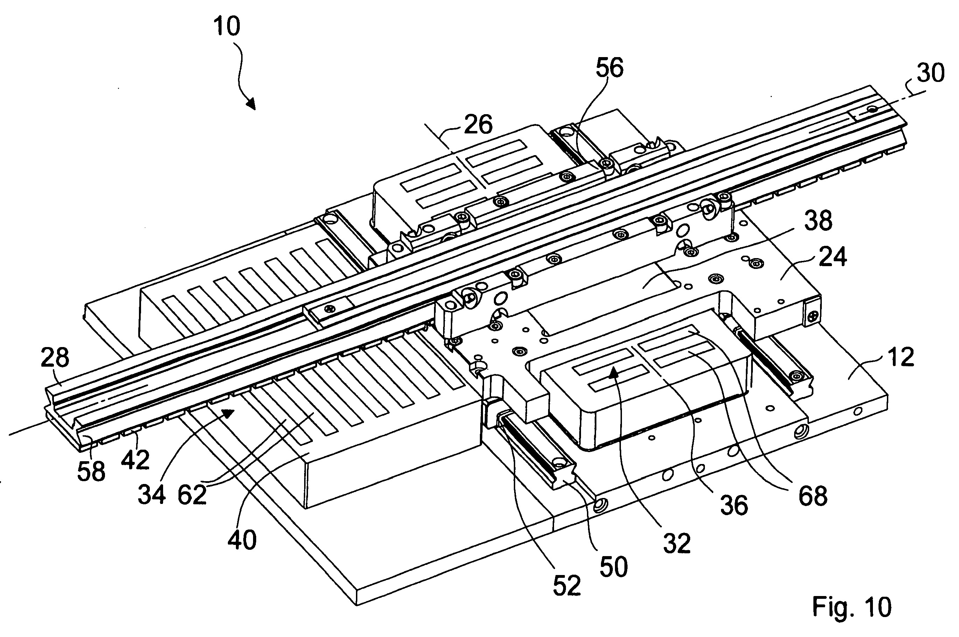

Die in der Figur 10 dargestellte Ausführungsform einer Handhabungsvorrichtung 10 unterscheidet sich von den vorstehend beschriebenen Ausführungsformen dadurch, dass die Primärteile 36 und 40 der Linearmotorantriebseinrichtungen 32 und 34 bezogen auf den ersten Schlitten 24 und den zweiten Schlitten 28 auf derselben Seite angeordnet sind. Die Primärteile 36 und 40 sind vorzugsweise auf einem gemeinsamen, zumindest im Wesentlichen flächigen Element des Maschinengestells 12 angeordnet und mit diesem verbunden. Bei dieser Anordnung ist insbesondere vorgesehen, dass die erste Achse 26 und die zweite Achse 30 eine horizontale Ebene aufspannen.

## Patentansprüche

1. Handhabungsvorrichtung (10) für Greifer, Werkzeuge und/oder Werkstücke, mit einer ersten Linearmotorantriebseinrichtung (32), welche ein erstes Primärteil (36) aufweist zum Antrieb eines ersten Schlittens (24) entlang einer ersten Achse (26) mittels eines ersten Sekundärteils (38), und mit einer zweiten Linearmotorantriebseinrichtung (34), welche ein zweites Primärteil (40) aufweist zum Antrieb eines zweiten Schlittens (28) entlang einer zweiten Achse (30) mittels eines zweiten Sekundärteils (42), wobei der zweite Schlitten (28) an dem ersten Schlitten (24) gelagert ist und zur Anordnung eines Greifers, Werkzeugs und/oder Werkstücks dient und wobei die zweite Achse (30) quer, insbesondere senkrecht, zu der ersten Achse (26) verläuft, **dadurch gekennzeichnet, dass** der erste Primärteil (36) und der zweite Primärteil (40) ortsfest und/oder relativ zueinander unbewegbar an einem gemeinsamen Maschinengestell (12) angeordnet sind und dass sich der zweite Primärteil (40) in einer zu der ersten Achse (26) parallelen Richtung zumindest über einen Teilhub (66) des Gesamthubs (64) des ersten Schlittens (24) erstreckt.

2. Handhabungsvorrichtung (10) nach Anspruch 1, **dadurch gekennzeichnet, dass** sich der zweite Primärteil (40) über den Gesamthub (64) des ersten Schlittens (24) erstreckt.

3. Handhabungsvorrichtung (10) nach einem der voranstehenden Ansprüche, **dadurch gekennzeichnet, dass** sich der erste Primärteil (36) und der zweite Primärteil (40) in zueinander im Wesentlichen parallelen Ebenen erstrecken.

4. Handhabungsvorrichtung (10) nach einem der voranstehenden Ansprüche, **dadurch gekennzeichnet, dass** der erste Primärteil (36) und der zweite Primärteil (40) gemeinsam einen Zwischenraum (60) begrenzen, in welchem der erste Schlitten (24) und der zweite Schlitten (28) angeordnet sind.

5. Handhabungsvorrichtung (10) nach einem der Ansprüche 1 bis 3, **dadurch gekennzeichnet, dass** der erste Primärteil (36) und der zweite Primärteil (40) bezogen auf den ersten Schlitten (24) und den zweiten Schlitten (28) auf derselben Seite angeordnet sind.

6. Handhabungsvorrichtung (10) nach einem der voranstehenden Ansprüche, **dadurch gekennzeichnet, dass** der erste Schlitten (24) dem ersten Primärteil (36) zugewandt angeordnet und der zweite Schlitten (28) dem zweiten Primärteil (40) zugewandt angeordnet ist.

7. Handhabungsvorrichtung (10) nach einem der voranstehenden Ansprüche, **dadurch gekennzeichnet, dass** der zweite Schlitten (28) an dem ersten Schlitten (24) ausschließlich in zu der zweiten Achse (30) paralleler Richtung bewegbar gelagert ist.

8. Handhabungsvorrichtung (10) nach einem der voranstehenden Ansprüche, **dadurch gekennzeichnet, dass** der zweite Primärteil (40) mindestens zwei sich parallel zu der zweiten Achse (30) erstreckende und bezogen auf die erste Achse relativ zueinander versetzte Antriebsabschnitte (70, 72, 74) aufweist, welche voneinander unabhängig ansteuerbar sind.

9. Handhabungsvorrichtung (10) nach Anspruch 8, **dadurch gekennzeichnet, dass** die Antriebsabschnitte (70, 72, 74) in Abhängigkeit der Stellung des ersten Schlittens (24) ansteuerbar sind.

10. Handhabungsvorrichtung (10) nach einem der voranstehenden Ansprüche, **dadurch gekennzeichnet, dass** die erste Achse (26) und die zweite Achse (30) eine bezogen auf die Schwerkraftrichtung (22) vertikale oder im Wesentlichen vertikale Ebene aufspannen.

11. Handhabungsvorrichtung (10) nach einem der voranstehenden Ansprüche, **dadurch gekennzeichnet, dass** die erste Achse (26) in einer bezogen auf die Schwerkraftrichtung (22) vertikalen oder im Wesentlichen vertikalen Richtung verläuft.

12. Handhabungsvorrichtung (10) nach einem der Ansprüche 1 bis 9, **dadurch gekennzeichnet, dass** die erste Achse (26) und die zweite Achse (30) eine bezogen auf die Schwerkraftrichtung (22) horizontale oder im Wesentlichen horizontale Ebene aufspannen.

13. Handhabungsvorrichtung (10) nach einem der voranstehenden Ansprüche, **gekennzeichnet durch** eine Antriebseinrichtung (76) für eine Bewegung des Maschinengestells (12) in einer von der ersten Achse (26) und der zweiten Achse (30) abweichenden Bewegungsrichtung.

14. Handhabungsvorrichtung (10) nach Anspruch 13, **dadurch gekennzeichnet, dass** die Antriebseinrichtung (76) in Form eines Drehtischs (78) oder in Form eines Linearantriebs (82) ausgebildet ist.

## Claims

1. A handling device (10) for grippers, tools and/or workpieces, having a first linear motor drive mechanism (32), which has a first primary part (36) for driving a first carriage (24) along a first axis (26) by means of a first secondary part (38) and having a second linear motor drive mechanism (34), which has a second primary part (40) for driving a second carriage (28) along a second axis (30) by means of a second secondary part (42), the second carriage (28) being supported on the first carriage (24) and serving for the disposition of a gripper, tool and/or workpiece, and the second axis (30) extending transversely, in particular perpendicularly, to the first axis (26), **characterized in that** the first primary part (36) and the second primary part (40) are stationary and/or disposed immovably relative to one another on a common machine frame (12), and that the second primary part (40) extends in a direction parallel to the first axis (26) at least over a partial stroke (66) of the total stroke (64) of the first carriage (24).

2. The handling device (10) according to claim 1, **characterized in that** the second primary part (40) extends over the total stroke (64) of the first carriage (24).

3. The handling device (10) according to one of the foregoing claims, **characterized in that** the first primary part (36) and the second primary part (40) extend in planes that are essentially parallel to one another.

4. The handling device (10) according to one of the foregoing claims, **characterized in that** the first primary part (36) and the second primary part (40) together delimit an intermediate chamber (60), in which the first carriage (24) and the second carriage (28) are disposed.

5. The handling device (10) according to one of claims 1 to 3, **characterized in that** the first primary part (36) and the second primary part (40) are disposed on the same side, with reference to the first carriage (24) and the second carriage (28).

6. The handling device (10) according to of the foregoing claims, **characterized in that** the first carriage (24) is disposed facing toward the first primary part (36), and the second carriage (28) is disposed facing toward the second primary part (40).

7. The handling device (10) according to one of the foregoing claims, **characterized in that** the second carriage (28) is supported movably on the first carriage (24) solely in the direction parallel to the second axis (30).

8. The handling device (10) according to one of the foregoing claims, **characterized in that** the second primary part (40) has at least two drive portions (70, 72, 74), extending parallel to the second axis (30) and offset with reference to the first axis relative to one another, which are triggerable independently of one another.

9. The handling device (10) according to claim 8, **characterized in that** the drive portions (70, 72, 74) are triggerable as a function of the position of the first carriage (24).

10. The handling device (10) according to one of the foregoing claims, **characterized in that** the first axis (26) and the second axis (30) define a plane that is vertical or essentially vertical relating to the direction (22) of gravitational force.

11. The handling device (10) according to one of the foregoing claims, **characterized in that** the first axis (26) extends in a direction that is vertical or essentially vertical relating to the direction (22) of gravitational force.

12. The handling device (10) according to one of claims 1 to 9, **characterized in that** the first axis (26) and the second axis (30) define a plane that is horizontal or essentially horizontal relating to the direction (22) of gravitational force.

13. The handling device (10) according to one of the foregoing claims, **characterized by** a drive mechanism (76) for a movement of the machine frame (12) in a movement direction deviating from the first axis (26) and the second axis (30).

14. The handling device (10) according to claim 13, **characterized in that** the drive mechanism (76) is embodied in the form of a turntable (78) or in the form of a linear motor (82).

## Revendications

1. Dispositif de manipulation (10) pour poignées, outils et/ou pièces usinées, comprenant un premier dispositif d'entraînement à moteur linéaire (32), lequel présente une première partie primaire (36) pour entraîner un premier chariot (24) le long d'un premier axe (26) au moyen d'une première partie secondaire (38), et comprenant un deuxième dispositif d'entraînement à moteur linéaire (34), lequel présente une deuxième partie primaire (40) pour entraîner un deuxième chariot (28) le long d'un deuxième axe (30) à l'aide d'une deuxième partie secondaire (42), dans lequel le deuxième chariot (28) repose sur le premier chariot (24) et sert à l'agencement d'une poignée, d'un outil et/ou d'une pièce usinée, dans lequel le deuxième axe (30) s'étend transversalement, en particulier perpendiculairement au premier axe (26), **caractérisé en ce que** la première partie primaire (36) et la deuxième partie primaire (40) sont agencées de manière fixe et/ou relativement immobiles l'une par rapport à l'autre sur un châssis de machine commun (12), et **en ce que** la deuxième partie primaire (40) s'étend dans une direction parallèle au premier axe (26), au moins sur une course partielle (66) de la course totale (64) du premier chariot (24).

2. Dispositif de manipulation (10) selon la revendication 1, **caractérisé en ce que** la deuxième partie primaire (40) s'étend sur la course totale (64) du premier chariot (24).

3. Dispositif de manipulation (10) selon l'une des revendications précédentes, **caractérisé en ce que** la première partie primaire (36) et la deuxième partie primaire (40) s'étendent dans des plans essentiellement parallèles.

4. Dispositif de manipulation (10) selon l'une des revendications précédentes, **caractérisé en ce que** la première partie primaire (36) et la deuxième partie primaire (40) délimitent ensemble un espace intermédiaire (60), dans lequel sont agencés le premier chariot (24) et le deuxième chariot (28).

5. Dispositif de manipulation (10) selon l'une des revendications 1 à 3, **caractérisé en ce que** la première partie primaire (36) et la deuxième partie primaire (40) sont agencées, par rapport au premier chariot (24) et au deuxième chariot (28), du même côté.

6. Dispositif de manipulation (10) selon l'une des revendications précédentes, **caractérisé en ce que** le premier chariot (24) est agencé orienté vers la première partie primaire (36) et **en ce que** le deuxième chariot (28) est agencé orienté vers la deuxième partie primaire (40).

7. Dispositif de manipulation (10) selon l'une des revendications précédentes, **caractérisé en ce que** le deuxième chariot (28) est monté sur le premier chariot (24) en étant mobile exclusivement dans la direction parallèle au deuxième axe (30).

8. Dispositif de manipulation (10) selon l'une des revendications précédentes, **caractérisé en ce que** la deuxième partie primaire (40) présente au moins deux sections de commande (70, 72, 74) s'étendant parallèlement au deuxième axe (30) et relativement décalées les unes par rapport aux autres par rapport au premier axe, lesquelles sections peuvent être commandées indépendamment les unes des autres.

9. Dispositif de manipulation (10) selon la revendication 8, **caractérisé en ce que** les sections de commande (70, 72, 74) peuvent être commandées en fonction de la position du premier chariot (24).

10. Dispositif de manipulation (10) selon l'une des revendications précédentes, **caractérisé en ce que** le premier axe (26) et le deuxième axe (30) forment un plan vertical par rapport au sens de gravité (22) ou essentiellement vertical.

11. Dispositif de manipulation (10) selon l'une des revendications précédentes, **caractérisé en ce que** le premier axe (26) s'étend dans une direction verticale par rapport au sens de gravité (22) ou dans une direction essentiellement verticale.

12. Dispositif de manipulation (10) selon l'une des revendications 1 à 9, **caractérisé en ce que** le premier axe (26) et le deuxième axe (30) forment un plan horizontal par rapport au sens de gravité (22) ou un plan essentiellement horizontal.

13. Dispositif de manipulation (10) selon l'une des revendications précédentes, **caractérisé par** un dispositif d'entraînement (76) pour déplacer le châssis de machine (12) dans un sens de déplacement s'écartant du premier axe (26) et du deuxième axe (30).

14. Dispositif de manipulation (10) selon la revendication 13, **caractérisé en ce que** le dispositif d'entraînement (76) est réalisé sous la forme d'une table rotative (78) ou sous la forme d'un entraînement linéaire (82).
